Europäisches Patentamt

European Patent Office

Office européen des brevets

(11) Veröffentlichungsnummer: **0 180 167**
**B1**

## (12) EUROPÄISCHE PATENTSCHRIFT

(45) Veröffentlichungstag der Patentschrift: **09.05.90**

(21) Anmeldenummer: **85113648.1**

(22) Anmeldetag: **26.10.85**

(51) Int. Cl.⁵: **H 02 K 15/06**, H 02 K 15/04

(54) **Vorrichtung und Verfahren zum Einbringen der Spulen in den Stator elektrischer Maschinen.**

(30) Priorität: **31.10.84 DE 3439769**

(43) Veröffentlichungstag der Anmeldung:
**07.05.86 Patentblatt 86/19**

(45) Bekanntmachung des Hinweises auf die
Patenterteilung:
**09.05.90 Patentblatt 90/19**

(84) Benannte Vertragsstaaten:
**DE FR GB IT**

(56) Entgegenhaltungen:
**EP-A-0 096 836**
**AT-B- 249 170**
**DE-A-1 802 171**

(73) Patentinhaber: **Veser, Franz
Kanalstrasse 16
D-7980 Ravensburg (DE)**

(72) Erfinder: **Veser, Franz
Kanalstrasse 16
D-7980 Ravensburg (DE)**

(74) Vertreter: **Patentanwälte Dipl.-Ing. E. Eisele
Dr.-Ing. H. Otten
Seestrasse 42
D-7980 Ravensburg (DE)**

Courier Press, Leamington Spa, England.

EP 0 180 167 B1

**Beschreibung**

Die Erfindung betrifft eine Vorrichtung und ein Verfahren zum Herstellen, Übertragen und Einbringen der Spulen in den Stator elektrischer Maschinen, wobei die zusammengeschalteten Spulen satzweise mittels halbkreisförmiger Wickelschablonen mit polrichtig abgestuften Drahtkammern maschinell gefertigt werden und die Schablonen auf Tragstäben axial abziehbar angeordnet sind, welche parallel zur Umlaufachse an Dreharmen einer Wickelmaschine so befestigt sind, daß sie sich nach Lösen einer Drehsperre drehen lassen, wobei ferner die Wickeldurchmesser der Schablonen den Sehnenlängen zwischen den korrespondierenden Statornuten entsprechen, und wobei die von den Schablonen abgenommenen Spulensätze mittels elastisch spreizbarer, zwischen die Nutenköpfe gruppenweise eingesetzter Einbringleisten in den Stator eingebracht. Eine ähuliche Vorrichtung ist aus EP—A—0.096.836 zu entnehmen.

Im Elektromaschinenbau werden die genannten Arbeitsschritte und die dazu benutzten Mittel im wesentlichen als voneinander getrennte Technologien behandelt. Das hat zur Folge, daß das Fertigungsziel, nämlich die Bestückung des Stators mit Drahtspulen, nur mit einem hohen Aufwand an Zeit und Arbeitskraft erreicht wird. Insbesondere macht es Mühe, die gewickelten Spulen zum Stator zu transportieren, ohne daß sie ihre ursprüngliche Form verlieren. Gewöhnlich sind zeitraubende Nebenarbeiten und zusätzliche Vorrichtungen erforderlich, um die dicht gewickelten Spulen so vorzubereiten, daß sie in befriedigender Weise in die engen Statornuten eingelegt werden können.

Es ist daher das Ziel der Erfindung, die Statorbestückung weiter zu rationalisieren. Die vorbereitenden Arbeitsschritte sollen in der Weise ausgeführt werden, daß das Einbringen der Spulen mit Hilfe von bekannten und bewährten sog. Einbringleisten erleichtert wird und somit der Zeitaufwand vom Wickeln der Spule bis zum Abschluß des Einbringvorgangs verkürzt werden kann.

Ein anderes Ziel besteht darin, die Spulen mit weniger Handgriffen von den Wickelschablonen abnehmen zu können, d. h. die Verstelleinrichtungen der Schablonen zu vereinfachen.

Die freigelegten lockeren Spulen sollen ihre Form bewahren, so daß nicht die Drahtlagen geordnet und die Spulenstränge durch Abbinden mit Bändern o. dgl. fixiert werden müssen. Insbesondere strebt die Erfindung an, flache Spulenstränge zu erzeugen, die sich besonders gut in die Einbringleisten einfügen lassen.

Ein weiteres Ziel ist die Herstellung polrichtig geordneter mehrphasiger Spulensätze, die durch übergeschleifte Wickeldrähte ohne Trennstellen im Verlauf des Wickelvorgangs miteinander verbunden sind und das gemeinsame Einbringen dieser Spulensätze in den Stator.

Die Erfindung will insbesondere die Leistungsfähigkeit von kleinen Wickelbetrieben und Reparaturwerkstätten für Elektromaschinen erhöhen und ohne große finanzielle Investitionen mit weniger geschulten Arbeitskräften die gleiche oder eine höhere Produktqualität erreichen.

Ausgehend von einer bekannten Vorrichtung der einleitend bezeichneten Art werden diese Ziele erfindungsgemäß dadurch erreicht, daß zum formhaltigen Übertragen des Spulensatzes von der Wickelmaschine zum Stator mindestens einer der beiden einander gegenüberstehenden Schablonensätze mit einem Stützkörper versehen ist, welcher in der Schablonenmittelachse verlaufend radial und senkrecht zur Schablonenschnittebene in den schablonenfreien Ram hineinragt und dessen Stützflächen spiegelgleich zum Stufenprofil des Schablonensatzes ausgebildet sind, wobei die Stufenradien des Stützkörpers den Wickelradien der Schablonenkammern entsprechen und wobei die Stützflächen mit der Wickelachse konzentrische Kreisbögen von etwa 10° Bogenlänge sind. Allein durch das Wenden eines solchen Schablonensatzes um 180° werden die fertig gewickelten Spulen in eine abnehmbereite Lage gebracht. Sie werden ohne Formverlust zusammen mit den Schablonensätzen transportiert und in die Einbringleisten eingefügt. Erst dann werden die Schablonensätze weggenommen.

Auf diese Weise wird nicht nur die Handarbeit des Wicklers vereinfacht und beschleunigt, sondern es zeichnet sich auch die Möglichkeit ab, die genannten Vorgänge bei der fabrikatorischen Herstellung von elektrischen Maschinen zu mechanisieren.

In den Ansprüchen sind weitere zweckmäßige konstruktive Einzelheiten beansprucht. Auf die wichtigsten soll hier kurz hingewiesen werden. Ein erhöhter Halterand verhindert das Abrutschen der Spulen von den Stützflächen der Stützkörper. Die Schablonensätze können hinsichtlich der Wickelradien veränderbar ausgebildet sein, beispielsweise durch aufsteckbare halbkreisförmige Einsetzschalen. Von besonderer Bedeutung sind Vorschläge, wonach der Schablonensatz von dem Stützkörper getrennt werden kann, wodurch das Einfügen der Spulenstränge in die Einbringleisten erleichtert wird. Mit Hilfe eines zweiten Tragstabes läßt sich ein solcher Stützkörper zusammen mit dem Schablonensatz leichter von dem Schablonentragstab abziehen.

Das besonders beanspruchte erfindungsgemäße Arbeitsverfahren hat zwei Varianten, die sich dadurch unterscheiden, ob der Stützkörper an dem zugehörigen Schablonensatz befestigt oder von diesem trennbar ist. Im einen Fall wird der Schablonensatz gewendet, solange er sich noch auf dem Schablonentragstab befindet. Im andern Fall dagegen wird die Wendebewegung vorgenommen, wenn beide Schablonensätze von der Wickelmaschine abgezogen sind, wobei der zweite Tragstab als Wendeachse dient.

Schließlich wird erfindungsgemäß eine besondere Einbringleistengruppe vorgeschlagen, die sich dadurch auszeichnet, daß die einzelnen Einbringleisten sowie insbesondere deren einzelne Zungen verschieden lang sind. Die Zungenenden sind vorzugsweise so gespreizt, daß sie einander berühren und dadurch Aufnahmeräume entstehen, die das Einführen der Spulenstränge erleichtern. Eine weitere diesbezügliche Erleichterung und Arbeitsvereinfachung wird dadurch erreicht, daß jeweils zwei einer Spule zugeordnete Einbringleisten durch eine eigene Färbung markiert sind.

In den Zeichnungen sind Einzelheiten der erfindungsgemäßen Vorrichtung als Ausführungsbeispiele schematisiert dargestellt. Es zeigt

Fig. 1 eine Seitenansicht der Schablonensätze mit den Spulen, teilweise geschnitten nach I—I aus Fig. 2;

Fig. 2 die Stirnansicht der Fig. 1 geschnitten nach II—II aus Fig. 1;

Fig. 3 eine Seitenansicht der Schablonensätze mit den Spulen bei der Scheitellage des Stützkörpers;

Fig. 4 die Stirnansicht der Fig. 3 im Schnitt IV—IV aus Fig. 3;

Fig. 5 die Stirnansicht des Stators mit angesetzten Spulen für einen 4-poligen Wickelschritt bei 36 Nuten;

Fig. 6 eine Seitenansicht der Fig. 5;

Fig. 7 eine Draufsicht auf den vergrößerten, in die Horizontalebene gestreckten Statorausschnitt VII—VII aus Fig. 5 mit schematisch eingezeichneten Einbringleisten, Spulen und Stützkörpern;

Fig. 8 den Querschnitt durch eine Schablonenkammer mit Einsetzschale;

Fig. 9 eine Seitenansicht eines anderen Schablonensatzes mit den Spulen, geschnitten nach IX—IX aus Fig. 10;

Fig. 10 die Stirnansicht der Fig. 9, geschnitten nach X—X aus Fig. 9;

Fig. 11 eine Seitenansicht des von dem Schablonensatz getrennten Stützkörpers nach Fig. 9.

Auf der Antriebswelle 1 der Wickelmaschine ist in üblicher Weise ein Dreharm 2 befestigt, an welchem die Tragstäbe 3, 3a für die Wickelschablonensätze 4, 4a angebracht sind. Diese sind drehschlüssig, jedoch axial abziehbar mit ihren Tragstäben verbunden und die Axialverschiebung kann durch Stellringe 5 blockiert werden. Die Tragstäbe 3, 3a sind am Dreharm 2 über je einen Zwischenkörper 6 befestigt, welcher in einer Längsnut 7 durch Betätigung einer Fixierschraube 8 am Dreharm 2 radial verstellt werden kann. Außerdem ist am inneren Ende des Tragstabes 3, 3a eine Spannschraube 9 vorgesehen, mit welcher die Drehbarkeit des Tragstabes bzw. des Schablonensatzes arretiert und nach Bedarf freigegeben werden kann.

Die in den Schablonenkammern 10 gewickelten Drahtspulen 11a, 11b, 11c sind in bekannter Weise durch Drahtverbindungen polrichtig zusammengeschaltet, so daß sie als Einheit weiterbehandelt und in den Stator 12 eingebracht werden können. Die Schablonenkammern 10 sind breit geformt und der Wickelvorgang ist so gesteuert, daß die Spulenstränge einen flachen Querschnitt erhalten. Diese vorbereitende Maßnahme erleichtert das nachfolgende Einbringen der Spulen in die engen Nuten 21 eines Stators 12 und die Verwendung der bekannten Einbringleisten.

Der Schablonensatz 4 ist mit einem Stützkörper 13 versehen, welcher mit der durchgehenden Schablonennabe 14 ein Stück bildet und welcher senkrecht zur Schablonen-Schnittebene verlaufend in den schablonenfreien Raum hineinsteht. Die beidseitig mit erhöhten Halterändern 15 versehenen Stützflächen 16a, 16b, 16c des Stützkörpers sind spiegelgleich zum gegenüberliegenden Schablonensatz 4 ausgebildet, wobei auch die Wickelradien übereinstimmen. Die den Tragstab 3 aufnehmende Schablonennabe 14 ist im vorliegenden Beispiel so angeordnet, daß die Achse des Tragstabes 3 in geringem Abstand von der geometrischen Formachse 17 der Halbschablone verläuft.

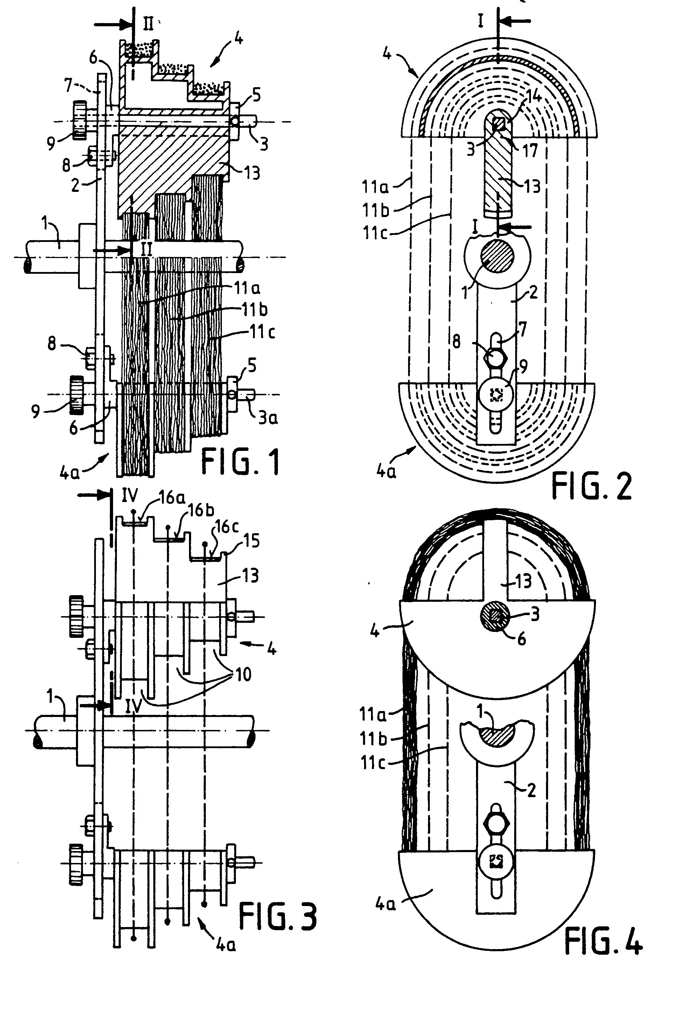

Die Wickelanlage ist in einem Betriebszustand bei fertig gewickeltem Spulensatz gezeigt. Um nun die vorgesehene Übertragung der Spulen zum Stator 12 so durchzuführen, daß die Raumform des Spulensatzes und der flache Spulenquerschnitt möglichst exakt erhalten bleiben, wird zunächst der Dreharm 2 so weit geschwenkt, bis der Schablonensatz 4 in der gezeigten oberen Scheitellage steht. Nun wird die Dreharretierung des Tragstabes 3 durch Lösen der Spannschraube 9 aufgehoben worauf der Tragstab mit dem Schablonensatz 4 und dem Stützkörper 13 um 180° gedreht und in die Lage nach Figur 3 und 4 gestellt wird, wobei der Zwischenkörper 6 als Lager für den Tragstab 3 wirkt. Durch diese Drehung werden nur die halbkreisförmigen Spulenköpfe freigestellt, während die vertikalen Spulenstränge nach wie vor in ihren Schablonenkammern 10 formhaltig geführt bleiben und jetzt auf den Stützflächen 16a, 16b, 16c des Stützkörpers 13 hängen, so daß die eigensteife Spulenform erhalten bleibt.

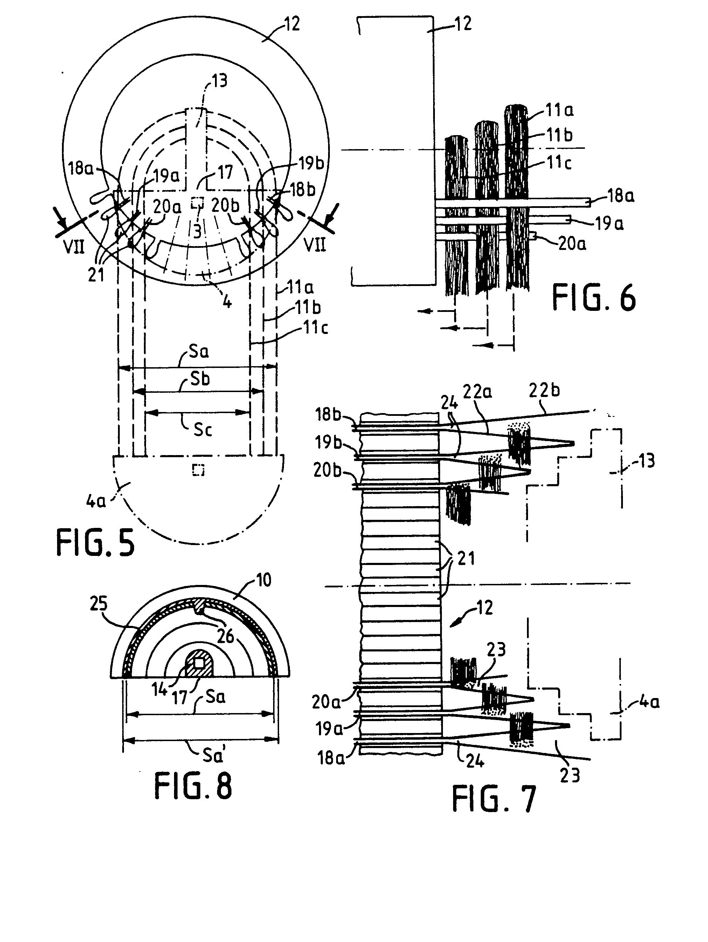

Die fertigen Spulensätze können jetzt ohne die Gefahr einer Deformierung zum Einsetzen in die Einbringleisten 18a, 19a, 20a (Fig. 6) gebracht werden. Zu diesem Zweck werden die Stellringe 5 gelöst, so daß die Schablonensätze 4, 4a von ihren Tragstäben 3, 3a zugleich axial abgezogen werden können und anschließend der gesamte Schablonen-Spulen-Komplex transportierbar ist. Dabei sind die oberen Spulenköpfe am Stützkörper 13 durch das Spulengewicht sicher aufgehängt, während die vertikalen Spulenstränge in den Schablonenkammern 10 des oberen Schablonensatzes 4 und des unteren 4a formschlüssig gehalten werden.

Die Figuren 5, 6 und 7 zeigen die Anordnung der Einbringleisten 18a, 18b, 19a, 19b, 20a, 20b, wobei der Stator 12 in seinem Aufnahmelager so gedreht ist, daß die zu bestückende Nutengruppe im unteren Scheitelbereich symmetrisch zur vertikalen Mittelachse steht. Die Einbringleisten sind vorbereitend in die Nuten 21 des Stators so eingesetzt, daß ihre aus den gespreizten Zungen 22a, 22b bestehenden Kopfteile aus den Statornuten herausragen. Entsprechend der Raumform des abgestuften Spulensatzes sind die Längen der gespreizten Leistenkopfteile ebenfalls abgestuft.

Daraus ergibt sich ein wirksamer optischer Hinweis für das folgerichtige und rasche Belegen der Leisten mit den unterschiedlich liegenden Spulen verschiedener Größe. Als weitere Hilfe für das sichere Hineinfinden zwischen die gespreizten Zungen der einzelnen Einbringleisten ist jedes zusamenwirkende Leistenpaar durch eine eigene Färbung, z. B. die Leisten 18a, 18b rot, die Leisten 19a, 19b grün und die Leisten 20a, 20b blau markiert, bzw. gefärbt. Außerdem sind die Spreizzwinkel der Leistenzungen so gewählt, daß die Zungen zweier benachbarten Leisten miteinander tangieren können, so daß das versehentliche Einschieben eines Spulenstranges zwischen zwei Leisten vermieden ist und das Ansetzen des ganzen Spulensatzes an die Leisten völlig gezielt und sicher in kurzer Zeit durchführbar ist.

Dabei wird gemäß Figur 5, 6, 7 der am Stützkörper 13 hängende Spulensatz direkt in die Räume 23 der gespreizten Kopfstücke der Einbringleisten 18, 19, 20 (a/b) übertragen, so daß die Spulen jetzt von diesen Kopfstücken getragen werden. Dadurch ist der obere Schablonensatz 4 mit dem Stützkörper 13 entlastet und kann aus dem Spulensatz zusammen mit dem unteren Schablonensatz 4a herausgenommen werden. Anschließend werden die Spulen 11a, 11b, 11c in Pfeilrichtung bis unmittelbar an den Stator bzw. soweit geschoben, daß sie den Einspannbereich 24 der Einbringleisten erreichen.

Das anschließende Einbringen des kompletten Spulensatzes in den Stator kann in bekannter Weise z. B. dadurch erfolgen, daß die an eine Zugvorrichtung angeschlossenen Einbringleisten axial durch die Statorbohrung gezogen werden und dabei die Spulenstränge in die Nuten 21 einziehen. Die in Fig. 7 gezeigten Spreizräume 23 der Einbringleisten erleichtern auch das Ansetzen der Deckschieber, die über die Spulenstränge geschoben eingebracht werden können.

Nach Beendigung der beschriebenen Nutenbelegung wird der Stator 12 um den Polschritt, im vorliegenden Beispiel um 90°, weitergedreht bis die zu belegende Nutengruppe wieder in der unteren Scheitelstellung nach Fig. 5 steht.

Die Dimensionen des Nutenteilkreises und des Teilungsmoduls bestimmen die Abmessungen der zu wickelnden Spulensätze, insbesondere die Sehnenlängen Sa, Sb, Sc. In Reparaturbetrieben werden jedoch auch Statoren angeliefert, bei welchen die genannten Sehnenlängen und die Profile der Spulenkammern von den Normen abweichen, so daß eine Nacharbeit der gewickelten Spulen, oder die Beschaffung besonderer Wickelschablonen notwendig ist. Da die Abweichungen meistens nur gering sind, so kann der genannte Aufwand dadurch umgangen werden, daß die Schablonen nach Fig. 8 jeweils durch Aufsetzen einer Einsetzschale 25 oder mehrerer an die abweichende Sehnenlänge, z. B. Sa' angepaßt werden, wobei zweckmäßig ein Schablonensatz mit den nächst kleineren Abmessungen verwendet wird. Die Einsetzschale 25 kann z. B. durch einen Steck-Konus 26 mit der Basisschablone lösbar verbunden werden.

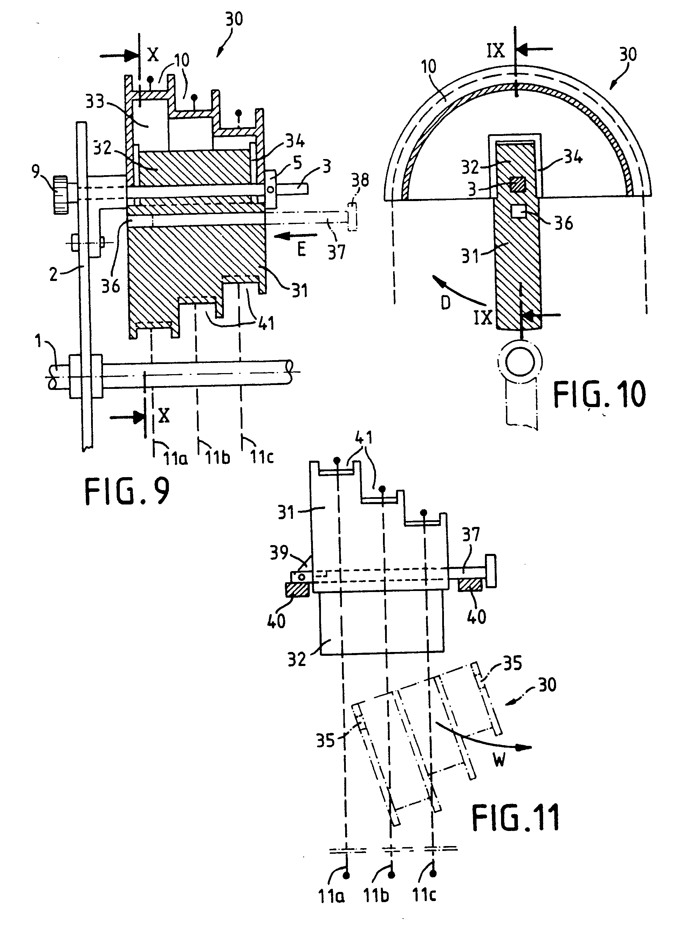

In den Figuren 9 bis 11 ist ein weiteres Ausführungsbeispiel eines Schablonensatzes mit Stützkörper dargestellt, der besonders für vieldrahtige Etagenwicklungen vorteilhaft ist. Mit dem ersten Ausführungsbeispiel übereinstimmende Teile tragen die gleichen Bezugszeichen.

Die Figuren 9 und 10 zeigen in ähnlicher Weise wie die Figuren 1 und 2 einen Schablonensatz 30, der auf den Tragstab 3 geschoben ist, welcher am Dreharm 2 der Wickelmaschine durch die Spannschraube 9 befestigt ist. Andererseits ist der Schablonensatz durch einen Stellring 5 axial gesichert.

Der Wickelvorgang ist abgeschlossen und die Drahtspulen 11a, 11b und 11c liegen flach in den Schablonenkammern 10. Der Spulensatz ist in seine obere Scheitellage gestellt, wobei die nach unten hängenden Spulenstränge durch die Drahtkammern des nicht gezeigten unteren Schablonensatzes geführt sind.

Der Stützkörper 31 ist ein vom Schablonensatz 30 getrennter selbständiger Körper und ist mit einem Aufnehmer 32 versehen, welcher in den hohlen Innenraum 33 der Schablonen hineinsteht, wo er kraftschlüssig, jedoch lösbar gehalten wird. Dies wird z. B. durch zwei in der Schablone angebrachte elastische Führungsleisten 34 erreicht, zwischen welche der Aufnehmer 32 einschiebbar ist, wobei eine Haltespannung entsteht, die ausreicht, um den Stützkörper 31 zu tragen.

Der Aufnehmer 32 besitzt die Längsbohrung, welche sich bei eingesetztem Aufnehmer mit den Bohrungen 35 in den Außenwänden des Schablonensatzes deckt, so daß der in die Bohrungen eingesetzte Tragstab 3 die Verbindung des Schablonensatzes 30 und des Aufnehmers 32 mit dem Dreharm 2 herstellt.

Unterhalb der Schablonenlängsachse ist der Stützkörper 31 mit einer zweiten profilierten Aufnahmebohrung 36 versehen, welche zur drehschlüssigen Aufnahme eines zweiten Tragstabes 37 dient, der einerseits mit einem Halteknopf 38 versehen sein kann und an seinem einschiebeseitigen Ende einen Mitnehmerriegel 39 besitzt, welcher selbsttätig in eine Querlage gestellt wird und das Abziehen des Schablonensatzes von der Tragstange 3 erleichtert, wobei diese am Dreharm 2 verbleibt.

Vor diesem Abziehvorgang wurde der zweite Tragstab 37 in die zweite Aufnahmebohrung 36 eingeschoben (Pfeil E), so daß dieser Stab nunmehr den Schablonensatz mit den Spulen und dem Stützkörper trägt.

In diesem Zustand kann zur Erleichterung der weiteren Handhabung der Tragstab 37 auf zwei Auflageschienen 40 (Fig. 11) abgesetzt werden.

Anschließend wird der Stützkörper 31 mit seinem Aufnehmer 32 und dem Schablonensatz 30 um die Achse des Tragstabes 37 um 180° geschwenkt (Pfeil D), so daß jetzt der Schablonensatz 30 die untere und der Stützkörper 31 die obere Scheitellage einnehmen, wobei die Drahtspulen 11a, 11b, 11c aus den Schablonenkammern 10 der Schablonen selbsttätig ausgehoben und von den Drahtkammern 41 des Stützkörpers 31 übernommen werden. Der Schablonensatz 30 kann jetzt vom Aufnehmer 32 abgelöst und aus dem Bereich der Spulenstränge herausgenommen werden (Pfeil W, Fig. 11).

Nachdem auch der unten in den Spulensträngen hängende andere Schablonensatz weggeräumt ist, kann das ungehinderte Einsetzen der Spulenstränge in die im Stator vorgeordneten Einbringleisten durchgeführt werden, wobei der Stützkörper die Raumform und Flachlage der Spulen gewährleistet.

1 Antriebswelle
2 Dreharm
3 Tragstab
3a Tragstab
4 (Wickel) Schablonensatz
4a (Wickel) Schablonensatz
5 Stellring
6 Zwischenkörper
7 Längsnut
8 Fixierschraube
9 Spannschraube
10 Schablonenkammer
11a (Draht) Spule
11b (Draht) Spule
11c (Draht) Spule
12 3 Stator
13 Stützkörper
14 Schablonennabe
15 Halterand
16a Stützfläche
16b Stützfläche
16c Stützfläche
17 Formachse
18a Einbringleiste
18b Einbringleiste
19a Einbringleiste
19b Einbringleiste
20a Einbringleiste
20b Einbringleiste
21 Nut
22a Zunge
22b Zunge
23 Raum
24 Einspannbereich
25 Einsetzschale
26 Steckkonus
30 Schablonensatz
31 Stützkörper
32 Aufnehmer
33 Innenraum
34 Führungsleiste
35 Bohrung
36 Aufnahmebohrung
37 2. Tragstab
38 Halteknopf
39 Mitnehmerriegel
40 Auflageschiene
41 Drahtkammer
Sa Sehnenlänge
Sb Sehnenlänge
Sc Sehnenlänge
E Pfeil
D Pfeil
W Pfeil

## Patentansprüche

1. Vorrichtung zum Herstellen, Übertragen und Einbringen der Spulen in den Stator (12) elektrischer Maschinen, wobei die zusammengeschalteten Spulen satzweise mittels halbkreisförmiger Wickelschablonen (4, 4a) mit polrichtig abgestuften Drahtkammern (10) maschinell gefertigt werden und die Schablonen auf Tragstäben (3, 3a) axial abziehbar angeordnet sind, welche parallel zur Umlaufachse an Dreharmen (2) einer Wickelmaschine so befestigt sind, daß sie sich nach Lösen einer Drehsperre (9) drehen lassen, wobei ferner die Wickeldurchmesser der Schablonen den Sehnenlängen zwischen den korrespondierenden Statornuten entsprechen, und wobei die von den Schablonen abgenommenen Spulensätze mittels elastisch spreizbarer, zwischen die Nutenköpfe gruppenweise eingesetzter Einbringleisten (18a—20b) in den Stator eingebracht werden, dadurch gekennzeichnet, daß zum formhaltigen Übertragen des Spulensatzes von der Wickelmaschine zum Stator (12) mindestens einer der beiden einander gegenüberstehenden Schablonensätze (4, 4a) mit einem Stützkörper (13) versehen ist, welcher in der Schablonenmittelachse verlaufend radial und senkrecht zur Schablonenschnittebene in den schablonenfreien Raum hineinragt und dessen Stützflächen (16a, b, c) spiegelgleich zum Stufenprofil des Schablonensatzes (4) ausgebildet sind, wobei die Stufenradien des Stützkörpers den Wickelradien der Schablonenkammern (10) entsprechen und wobei die Stützflächen mit der Wickelachse konzentrische Kreisbögen von etwa 10° Bogenlänge sind.

2. Vorrichtung nach Anspruch 1, dadurch gekennzeichnet, daß die Stützflächen beidseitig mit einem erhöhten Halterand (15) versehen sind, dessen Höhe etwa der Dicke des Spulenstranges entspricht.

3. Vorrichtung nach Anspruch 2, dadurch gekennzeichnet, daß zur Anpassung der Wickelradien an die Sehnenlängen (Sa, Sb, Sc) zwischen den korrespondierenden Statornuten (21) der Schablonensatz veränderbar ausgebildet ist.

4. Vorrichtung nach Anspruch 3, dadurch gekennzeichnet, daß eine halbkreisförmige Einsetzschale (25) vorgesehen ist, deren Innenradius dem Radius der vorhandenen Schablonenkammer angepaßt ist und welche in die Schablonenkammer (10) einsetzbar und formschlüssig, jedoch auswechselbar, mit dieser verbindbar ist.

5. Vorrichtung nach Anspruch 4, dadurch gekennzeichnet, daß zur Festlegung der Breite des Spulenstrangs die Einsetzschale (25) eine mit Kammerwänden versehene Spulenkammer bildet.

6. Vorrichtung nach Anspruch 1, dadurch gekennzeichnet, daß der Stützkörper (31) mit einem parallel zur zentralen Längsachse des Schablonensatzes (30) verlaufenden Aufnehmer (32) versehen ist, welcher in den Körper des Schablonensatzes einsetzbar ist und die Aufnahmebohrung für den Schablonentragstab (3) besitzt, und daß der Stützkörper außerhalb des Schablonensatzes mit einer zweiten Aufnahmebohrung (36) versehen ist, welche bezüglich der Schablonenmittelebene symmetrisch zur inneren Aufnahmebohrung angeordnet ist und für die formschlüssige Aufnahme eines zweiten Tragstabes (37) eingerichtet ist.

7. Vorrichtung nach Anspruch 6, dadurch gekennzeichnet, daß der Aufnehmer (32) formschlüssig, jedoch ablösbar mit dem Schablonensatz (30) verbunden ist.

8. Vorrichtung nach Anspruch 6, dadurch gekennzeichnet, daß der zweite Tragstab (37) an seinem einschiebseitigen Ende mit einem Mitnehmerriegel (39) versehen ist, der in der inneren Endlage des Tragstabes selbsttätig in eine Querlage gestellt wird.

9. Verfahren zum Übertragen und Einbringen der fertig gewickelten Spulen mittels der Vorrichtung nach Anspruch 1, gekennzeichnet durch folgende Verfahrensschritt

a) die beiden einander gegenüberstehenden Schablonensätze (4, 4a) werden durch Drehen der Dreharme (2) so eingestellt, daß der mit dem Stützkörper (13) versehene Schablonensatz (4) die obere Scheitelstellung einnimmt,

b) nach Lösen der Drehsperre (9) wird der obere Schablonensatz um 180° um die Achse seines Tragstabes (3) gedreht, so daß der Stützkörper (13) die vertikale Abstützung der freigesetzten Spulenköpfe übernimmt, wobei die vertikalen Spulenstränge in den Kammern des gedrehten (4) und des unten stehenden (4a) Schablonensatzes verbleiben,

c) der obere und der untere Schablonensatz werden mit ihren gelockerten Spulen von den Tragstäben (3, 3a) horizontal abgezogen und zum horizontalachsig gelagerten Stator (12) gebracht, wobei der obere Schablonensatz (4) von Hand oder durch eine Übertragvorrichtung getragen wird, während der untere Schablonensatz (4a) in den Spulensträngen hängend mittransportiert wird,

d) die Spulenstränge werden in der Reihenfolge der gestuften Spulengrößen zwischen die Zungen (22a, 22b) von polrichtig im unteren Scheitelbereich des Stators eingesetzten Einbringleisten (18a bis 20b) eingeschoben, welche eine Einbringleistengruppe bilden,

e) nachdem alle Spulen in den Einbringleisten (18a bis 20b) hängen, werden die Schablonensätze (4, 4a) abgenommen und der Einbringleistensatz mit den Spulen vollends in den Stator (12) eingebracht, worauf der Stator entsprechend der Polzahl in die nächste Aufnahmeposition weitergedreht wird und das Einbringen der nächsten Spulengruppe in der beschriebenen Weise durchgeführt wird.

10. Verfahren zum Übertragen und Einbringen der fertig gewickelten Spulen mittels der Vorrichtung nach Anspruch 6, gekennzeichnet durch folgende Verfahrensschritte.

a) der Schablonensatz (30) wird zusammen mit dem Stützkörper (31) an der Wickelmaschine in die obere Scheitelstellung gebracht, sodann wird der zweite Tragstab (37) in die zweite Aufnahmebohrung (36) des Stützkörpers völlig eingeschoben, worauf der Schablonensatz mit den Spulen und dem zweiten Tragstab über den inneren Tragstab (3) abgezogen wird unter gleichzeitigem Abziehen des unteren Schablonensatzes,

b) der Schablonensatz wird um die Achse des zweiten Tragstabes (37) um 180° geschwenkt, so daß der Stützkörper (31) in die obere und der Schablonensatz (30) in die untere Scheitellage gestellt sind und die Spulenstränge von den Drahtkammern (41) des Stützkörpers übernommen werden,

c) der Schablonensatz (30) wird vom Stützkörper (31) getrennt und zusammen mit dem unteren Schablonensatz aus dem Spulenbereich herausgenommen, so daß in dem geschaffenen Freiraum die Spulenstränge in die im Stator vorgeordneten Einbringleisten eingesetzt werden können, wonach auch der Stützkörper mit seinem Tragstab abgenommen wird und die Spulen in den Stator eingebracht werden.

11. Einbringleistengruppe zur Durchführung des Verfahrens nach Anspruch 9, dadurch gekennzeichnet, daß für die Aufnahme einer mehrstufigen Spulengruppe die einzelnen Einbringleisten (18a bis 20b) mit verschiedenen, dem Stufensprung der Spulen (lla, 11b, 11c) angepaßten Längen ausgeführt und zur Aufnahme der Spulen so in den Stator (12) eingesetzt sind, daß die Kopfteile der Leisten, entsprechend den Spulenweiten und dem Schablonenmodul räumlich abgestuft aus dem Stator herausstehen.

12. Einbringleistengruppe nach Anspruch 11, dadurch gekennzeichnet, daß die beiden Zungen (22a, 22b) jeder einzelnen Einbringleiste (18b) verschieden lang sind, derart, daß bei der in den Stator (12) eingesetzten Einbringleistengruppe jeweils die Länge der kleineren Zunge der Länge der größeren benachbarten Zunge entspricht, wobei dieses Verhältnis bei den einander gegenüberstehenden Einbringleistengruppen (18a, 19a, 20a und 18b, 19b, 20b) spiegelgleich ist.

13. Einbringleistengruppe nach Anspruch 12, dadurch gekennzeichnet, daß jeweils zwei einer Spule zugeordnete Einbringleisten (z. B. 18a und 18b) durch eine eigene Färbung markiert sind.

14. Einbringleistengruppe nach Anspruch 12, gekennzeichnet durch eine derartige Spreizung der Zungenenden, daß außerhalb des Stators Aufnahmeräume (23) für das erleichterte Einführen des Spulenstranges gebildet werden, wobei der Spreizwinkel so bemessen ist, daß die Zungen zweier benachbarter Einbringleisten (z. B. 19a und 20a) miteinander tangieren können.

**Revendications**

1. Dispositif pour réaliser, transférer et mettre en place des bobinages dans le stator (12) d'appareils électriques, les bobinages interconnectés étant fabriqués mécaniquement, par lots, au moyen de gabarits d'enroulement semi-circulaires (4, 4a), ayant des chambres de fils étagées de polarité correcte (10), et les gabarits étant agencés de façon axialement retirable sur des barres de support (3, 3a), lesquelles sont fixées, parallèlement à l'axe de rotation, à des bras rotatifs (2) d'une machine d'enroulement, de sorte qu'elles peuvent tourner après libération d'un organe de blocage (9), les diamètres d'enroulement des gabarits correspondant de plus aux longueurs de corde entre les gorges du stator correspondantes, et les jeux de bobinages enlevés des gabarits étant mis en place dans le stator au moyen de baguettes de mise en place (18a-20b) élastiquement écartables, insérées en groupe entre les têtes de gorge, caractérisé en ce que, pour transférer le jeu de bobinages de la machine d'enroulement au stator (12) en maintenant sa forme, au moins un des deux jeux de gabarits opposés l'un à l'autre (4, 4a) est muni d'un corps d'appui (13), lequel fait saillie dans l'espace sans gabarit en s'étendant radialement dans l'axe médian des gabarits et perpendiculairement au plan de coupe des gabarits, et dont les surfaces d'appui (16a, b, c) sont réalisées de façon symétrique par rapport au profil étagé du jeu de gabarits (4), les rayons étagés du corps d'appui correspondant aux rayons d'enroulement des chambres (10) des gabarits et les surfaces d'appui étant des arcs de cercle concentriques à l'axe d'enroulement ayant une longueur d'arc d'environ 10°.

2. Dispositif selon la revendication 1, caractérisé en ce que les surfaces d'appui sont munies, des deux côtés, d'un bord de maintien surélevé (15), dont la hauteur correspond à peu près à l'épaisseur du bobinage.

3. Dispositif selon la revendication 2, caractérisé en ce que le jeu de gabarits est modifiable pour adapter les rayons d'enroulement aux longueurs de corde (Sa, Sb, Sc) entre les gorges correspondantes (21) du stator.

4. Dispositif selon la revendication 3, caractérisé en ce qu'une coque de mise en place semi-circulaire (25) est prévue, dont le rayon interne est adapté au rayon de la chambre de gabarit existante, et qui peut être insérée dans la chambre de gabarit (10) et être reliée à celle-ci en engagement positif, mais en pouvant cependant être échangée.

5. Dispositif selon la revendication 4, caractérisé en ce que, pour déterminer la largeur du bobinage, la coque (25) forme une chambre de bobinage munie de parois.

6. Dispositif selon la revendication 1, caractérisé en ce que le corps d'appui (31) est muni d'un élément de réception (32) s'étendant parallèlement à l'axe longitudinal central du jeu de gabarits (30), lequel peut être inséré dans le corps du jeu de gabarits et possède le perçage de réception pour la barre de support des gabarits (3), et en ce que le corps d'appui est muni, à l'extérieur du jeu de gabarits, d'un second perçage de réception (36), lequel est agencé, par rapport au plan médian des gabarits, symétriquement par rapport au perçage de réception interne et est destiné à la réception, par engagement positif, d'une seconde barre de support (37).

7. Dispositif selon la revendication 6, caractérisé en ce que l'élément de réception (32) est relié, par engagement positif, mais cependant de façon amovible, au jeu de gabarits (30).

8. Dispositif selon la revendication 6, caractérisé en ce que la seconde barre de support (37) est munie, à son extrémité d'insertion, d'une barre d'entraînement (39), qui, dans la position d'extrémité interne de la barre de support, se place automatiquement en position transversale.

9. Procédé pour le transfert et la mise en place de bobinages enroulés, au moyen du dispositif selon la revendication 1, caractérisé par les étapes suivantes:

a) les deux jeux de gabarits opposés (4, 4a) sont réglés, par rotation des bras rotatifs (2), de sorte que le jeu de gabarits (4) muni du corps d'appui (13) prend la position supérieure;

b) après libération de l'organe de blocage (9), le jeu de gabarits supérieur est tourné de 180° autour de l'axe de sa barre de support (3), de sorte que le corps d'appui (13) reçoit l'appui vertical des têtes de bobinages libérées, les bobinages verticaux restant dans les chambres du jeu de gabarits tourné (4) et du jeu de gabarits (4a) en dessous;

c) le jeu de gabarits supérieur et le jeu de gabarits inférieur sont retirés horizontalement des barres de support (3, 3a) avec leurs bobinages relâchés, et amenés au stator (12) monté horizontalement à l'axe, le jeu de gabarits supérieur (4) étant porté manuellement ou par un dispositif de transfert, tandis que le jeu de gabarits inférieur (4a) est transporté avec lui, en étant suspendu dans les bobinages;

d) les bobinages sont insérés, dans l'ordre des tailles étagées, entre les languettes (22a, 22b) de baguettes de mise en place (18a à 20b) disposées, avec une polarité correcte, dans la zone inférieure du stator, lesquelles forment un groupe de baguettes de mise en place;

e) après que tous les bobinages sont suspendus dans les baguettes de mise en place (18a à 20b), les jeux de gabarits (4, 4a) sont retirés et le jeu de baguettes de mise en place avec les bobinages est complètement installé dans le stator (12), après quoi le stator est encore tourné, de façon correspondant au nombre de pôles, dans la position de réception suivante, et la mise en place du groupe suivant de bobinages est effectuée de la façon décrite.

10. Procédé pour le transfert et la mise en place de bobinages enroulés, au moyen du dispositif selon la revendication 6, caractérisé par les étapes suivantes:

a) le jeu de gabarits (30) est amené, en même temps que le corps d'appui (31), sur la machine d'enroulement, dans la position supérieure, après quoi la seconde barre de support (37) est entièrement insérée dans le second perçage de réception (36) du corps d'appui, et, ensuite, le jeu de gabarits avec les bobinages et la seconde barre de support est retiré sur la barre de support interne (3), en même temps que le jeu de gabarits inférieur est retiré;

b) le jeu de gabarits est pivoté de 180° autour de l'axe de la seconde barre de support (37), de sorte

# EP 0 180 167 B1

que le corps d'appui (31) est placé dans la position supérieure et le jeu de gabarits (30) dans la position inférieure, et les bobinages sont reçus par les chambres de fils (41) du corps d'appui;

c) le jeu de gabarits (30) est séparé du corps d'appui (31) et, en même temps que le jeu de gabarits inférieur, est retiré de la zone des bobinages, de sorte que, dans l'espace libre créé, les bobinages peuvent être disposés sur les baguettes de mise en place préalablement agencées dans le stator, après quoi le corps d'appui avec sa barre de support est également retiré et les bobinages sont mis en place dans le stator.

11. Groupe de baguettes de mise en place pour la mise en oeuvre du procédé selon la revendication 9, caractérisé en ce que, pour la réception d'un groupe de bobinages à plusieurs étages, les baguettes individuelles de mise en place (18a à 20b) sont réalisées en ayant des longueurs différentes adaptées à l'écart entre les bobinages (11a, 11b, 11c), et sont disposées dans le stator (12) pour la réception des bobinages, de sorte que les parties de tête des baguettes font saillie du stator, de façon étagée dans l'espace, de façon correspondant aux largeurs des bobinages et au module des gabarits.

12. Groupe de baguettes de mise en place selon la revendication 11, caractérisé en ce que les deux languettes (22a, 22b) de chaque baguette de mise en place individuelle (18b) sont de longueurs différentes, de sorte que, pour le groupe de baguettes de mise en place inséré dans le stator (12), la longueur de la languette la plus petite correspond, à chaque fois, à la longueur de la languette voisine la plus grande, cette relation étant symétrique pour les groupes de baguettes de mise en place opposés (18a, 19a, 20a et 18b, 19b, 20b).

13. Groupe de baguettes de mise en place selon la revendication 12, caractérisé en ce que, à chaque fois, deux baguettes de mise en place associées à un bobinage (par exemple 18a et 18b) sont marquées par une coloration particulière.

14. Groupe de baguettes de mise en place selon la revendication 12, caractérisé par un écartement des extrémités des languettes tel que, à l'extérieur du stator, des espaces de réception (23) pour faciliter l'introduction du bobinage sont formés, l'angle d'écartement étant choisi de sorte que les languettes de deux baguettes de mise en place voisines (par exemple 19a et 20a) peuvent être tangentes l'une à l'autre.

**Claims**

1. Device for the production, transference and insertion of coils into the stators (12) of electric machines, where the connected coils are mechanically prepared by batches by means of semi-circular winding templates (4, 4a) with wire chambers (10) staged with correct polarity and the templates are arranged axially withdrawably on carrier bars (3, 3a) which are secured parallel to the axis of rotation on rotating arms (2) of a winding machine so that they can be rotated after release of a rotation catch (9), while furthermore the winding diameters of the templates correspond to the chord lengths between the corresponding stator grooves, and while the coil sets taken from the templates are brought into the stator by means of elastically openable inserter strips (18a—20b) inserted by groups between the groove heads, characterised in that for the shape-retaining transference of the coil set from the winding machine to the stator (12) at least one of the two mutually opposite template sets (4, 4a) is provided with a support body (13) which, extending in the central axis of the templates, protrudes radially and perpendicular of the template sectional plane into the template-free space and the support faces (16a, b, c) of which are made in mirror image to the step profile of the template set (4), while the step radii of the support body correspond to the winding radii of the template chambers (10) and the support faces are arcs of about 10o arc length, concentric with the winding axis.

2. Device according to Claim 1, characterised in that the support faces are provided on both sides with an elevated retaining edge (15) the height of which corresponds approximately to the thickness of the coil length.

3. Device according to Claim 2, characterised in that for the adaptation of the winding radii to the chord lengths (Sa, Sb, Sc) between the corresponding stator grooves (21), the template set is made variable.

4. Device according to Claim 3, characterised in that a semi-circular insert dish (25) is provided the internal radius of which is adapted to the radius of the existing template chamber and which is insertable into the template chamber (10) and connectable in shape-locking but exchangeable with the latter.

5. Device according to Claim 4, characterised in that for the determination of the width of the coil length the insert dish (25) forms a coil chamber provided with chamber walls.

6. Device according to Claim 1, characterised in that the support body (31) is provided with a receiver (32) extending parallel to the central longitudinal axis of the template set (30), which receiver is insertable into the body of the template set and possesses the reception bore for the template carrier bar (3), and in that the support body is provided, outside the template set, with a second reception bore (36) which is arranged, in relation to the template central plane, symmetrically of the inner reception bore, and is set up for the shape-locking reception of a second carrier bar (37).

7. Device according to Claim 6, characterised in that the receiver (32) is connected in shape-locking but detachable manner with the template set (30).

8. Device according to Claim 6, characterised in that the second carrier bar (37) is provided at its insertion end with an engaging bolt (39) which is set automatically into a transverse position when the carrier bar is in the inner end position.

9. Method for the transference and insertion of the completed wound coils by means of the device according to Claim 1, characterised by the following method steps:

a) the two mutually opposite template sets (4, 4a) are set, by rotation of the rotating arms (2), so that the template set (4) provided with the support body (13) assumes the upper apex position,

b) after release of the rotation catch (9) the upper template set is turned through 180° about the axis of its carrier bar (3), so that the support body (13) takes over the vertical supporting of the liberated coil heads, while the vertical coil lengths remain in the chambers of the turned template set (4) and of the downwardly standing template set (4a),

c) the upper and the lower template sets are withdrawn horizontally with their loosened coils from the carrier bars (3, 3a) and brought to the stator (12) mounted with horizontal axis, the upper template set (4) being carried by hand or by a transfer device, while the lower template set (4a) is transported therewith, hanging in the coil lengths,

d) the coil lengths are pushed, in the sequence of the stepped coil sizes, in between the tongues (22a, 22b) of inserter strips (18a to 20b) inserted in correct polarity in the lower apex region of the stator, forming an inserter strip group,

e) after all the coils are hanging in the inserter strips (18a to 20b), the template sets (4, 4a) are taken off and the inserter strip set with the coils is introduced completely into the stator (12), whereupon the stator is rotated further, according to the pole number, into the next reception position and the insertion of the next coil group is carried out in the manner as described.

10. Method for transfer and insertion of the completed wound coils by means of the device according to Claim 6, characterised by the following method steps:

a) the template set (30) is brought together with the support body (31) on the winding machine into the upper apex position, then the second carrier bar (37) is completely pushed into the second reception bore (36) of the support body, whereupon the template set with the coils and the second carrier bar is withdrawn over the inner carrier bar (3), with simultaneous withdrawal of the lower template set,

b) the template set is pivoted through 180° about the axis of the second carrier bar (37), so that the support body (31) is set into the upper and the template set (30) into the lower apex position and the coil lengths are taken over by the wire chambers (41) of the support body,

c) the template set (30) is separated from the support body (31) and taken together with the lower template set out of the coil region, so that in the free space produced the coil lengths can be inserted into the inserter strips arranged in front in the stator, whereafter the support body with its carrier bar is also removed and the coils are inserted into the stator.

11. Inserter strip group for carrying out the method according to Claim 9, characterised in that for the reception of a multi-stage coil group the individual inserter strips (18a to 20b) are made with different lengths adapted to the step interval of the coils (11a, 11b, 11c) and so inserted, for the reception of the coils, into the stator (12) that the head parts of the strips, three-dimensionally graduated according to the coil widths and the template module, protrude from the stator.

12. Inserter strip group according to Claim 11, characterised in that the two tongues (22a, 22b) of each individual inserter strip (18b) are of different lengths in such a way that in the inserter strip group inserted into the stator (12) in each case the length of the smaller tongue corresponds to the length of the larger adjacent tongue, and this proportion is in mirror-image in the mutually opposite inserter strip groups (18a, 19a, 20a and 18b, 19b, 20b).

13. Inserter strip group according to Claim 12, characterised in that in each case two inserter strips (for example 18a and 18b) associated with a coil are marked by their own coloration.

14. Inserter strip group according to Claim 12, characterised by such an opening out of the tongue ends that outside the stator reception spaces are formed for the facilitated introduction of the coil length, while the angle of aperture is dimensioned so that the tongues of two adjacent inserter strips (for example 19a and 20a) can be tangential to one another.

FIG. 1

FIG. 2

FIG. 3

FIG. 4

FIG.5

FIG. 6

FIG.8

FIG. 7

FIG. 9

FIG. 10

FIG. 11